# EUROPEAN PATENT SPECIFICATION

(11) **EP 2 302 962 B1**
(45) Date of publication and mention of the grant of the patent: **01.01.2014**
(21) Application number: 09806382.9
(22) Date of filing: 14.08.2009
(51) Int. Cl.: H04W 4/16, H04M 3/42, H04W 8/24

(54) **METHOD, DEVICE, SYSTEM, TERMINAL AND SERVER FOR RECEIVING AND DISTRIBUTING MEDIA SERVICE**
VERFAHREN, VORRICHTUNG, SYSTEM, ENDGERÄT UND SERVER ZUM EMPFANGEN UND VERTEILEN EINES MEDIENDIENSTES
PROCÉDÉ, DISPOSITIF, SYSTÈME, TERMINAL ET SERVEUR SERVANT À RECEVOIR ET À DISTRIBUER UN SERVICE MULTIMÉDIA

(30) Priority: 15.08.2008 CN 200810147429
(43) Date of publication of application: 30.03.2011
(73) Proprietor: Huawei Technologies Co., Ltd., Longgang District, Shenzhen Guangdong 518129 (CN)
(72) Inventor: YANG, Jian, Longgang District Shenzhen 518129 (CN); CHEN, Guoqiao, Longgang District Shenzhen 518129 (CN); BAO, Yuan, Longgang District Shenzhen 518129 (CN); WANG, Sichen, Longgang District Shenzhen 518129 (CN)
(74) Representative: Kreuz, Georg Maria
(86) International application number: PCT/CN2009/073268
(87) International publication number: WO 2010/017779

(56) References cited:
- WO-A1-2007/142447
- CN-A- 101 043 647
- CN-A- 101 043 647
- CN-A- 101 188 809
- "3rd Generation Partnership Project; Technical Specification Group Services and System Aspects Study on Architecture of IMS based Customized Alerting Tones (CAT); Stage 2 (Release 8)", 3GPP STANDARD; 3GPP TR 23.872, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V1.1.0, 1 June 2008 (2008-06-01), pages 1-41, XP050380933,
- "3rd Generation Partnership Project; Technical Specification Group Services and System Aspects; Study of Customised Alerting Tone (CAT) requirements (Release 8)", 3GPP STANDARD; 3GPP TR 22.982, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.0.0, 1 December 2006 (2006-12-01), pages 1-18, XP050361533,

## Description

### Field of the Invention

The present invention relates to network communications, and in particular, to a method, an apparatus, a system, User Equipment (UE), and a server for receiving and delivering a media service.

### Background of the Invention

Currently, most mobile terminals support Customized Ring Back Tone (CRBT) and Customized Ring Tone (CRT) services. The CRBT service enables a user to customize a ring back tone for the user's mobile terminal according to the preferences and requirements of the user. The ring back tone may be music, an advertisement, or a speech recorded by the user. The CRT service enables auser to customize a ring tone for the user's mobile terminal according to the preferences and requirements of the user. With maturity of 3rd Generation (3G) technologies and products, more 3G networks are deployed and more 3G services are provided around the world. An IP Multimedia Subsystem (IMS) is defined by the 3rd Generation Partnership Project (3GPP) standardization organization in R5 to implement next-generation multimedia telecom services such as audio, video and data.

The prior art has the following problems:

Currently, the CRBT service is triggered based on only the user's information about subscription to the Customized Multimedia Ringback tone (CMR) service on the server, without considering whether the UE is capable of playing aCMR. The CMR service (such as,theCRBT service or the CRT service) and the Customized Background Tone (CBT) service require different capabilities of the UE. Therefore, in the CMR service in the prior art, different processes cannot be performed according to different capabilities of the UE. In the service processing in the prior art, the UE that receives the service is unable to predict the attribute of the received service or indicate the service attribute to the user.

A Chinese patent publication (Publication No.: CN101043647A) discloses a method for implementing the Multimedia RingBack Tone (MRBT) service and Multimedia Caller Identification (MCID) service. The method includes: if the network determines that the calling UE is an MCID service subscriber and determines that the called UE supports the MCID early media, the network negotiates the MCID early media with the called UE, and plays a MCID to the called UE if the negotiation succeeds; if the network determines that the called UE is an MRBT service subscriber and the calling UE supports the MRBT early media, the network negotiates the MRBT early media with the calling UE, and plays an MRBT to the calling UE if the negotiation succeeds.

APCT patent publication (Publication No.: WO 2007/142447A1) discloses a method of providing an early media service based on a SIP. In the method, an originating terminal sends an INVITE message for establishing a call connection with a terminating terminal to a SIP server. The INVITE information may include a service processing identifier which indicating whether the originating terminal supports an early session. Then, the SIP server transmits the INVITE information to an application server, and the application server confirms whether the originating terminal supports an early session based on the service processing identifier and transmits an INVITE message to the terminating terminal through SIP server.

After that, the application server acquires media information of the terminating terminal subscriber. Then the application server performs an early session initiation process for providing an early service to the originating terminal. Specifically, during the initiation process, the originating terminal may transmits to the application server SDP information including codec information and capability information of the originating terminal.

Then, the SDP information is transmitted from the application server to the media server, and the media server determines media types, formats and the like that the originating terminal can process based on the capability information of the originating terminal.

### Summary of the Invention

The present invention provides a method according to claim 1 and an apparatus according to claim 5 for receiving a media service. The attribute of the media information to be received by the UE is indicated by an identifier carried in the information during information exchange. Therefore, the UE can notify the user and prepare for receiving the media information according to the attribute of the media information. The identifier can also indicate the capability required for the UE to process the media service. According to different capabilities of the UE, corresponding operations are performed so that the UE can receive the media information matching its capability to process media information.

Compared with the prior art, the present invention brings at least the following benefits:

The present invention obtains a media service identifier carried in a call setup request; parse the media service identifier to obtain the media information attribute indicated by the media service identifier; and display the media information attribute and receive the media information. The carried identifier indicates the type of the media service so that the UE knows the type of the imminent media service and performs operations that match the type of service.

### Brief Description of the Drawings

To make the technical solution under the present invention or in the prior art clearer, the following describes the accompanying drawings involved in the description of the embodiments of the present invention or the prior art. Apparently, the accompanying drawings outlined below are exemplary only and not exhaustive.
FIG. 1 is a flowchart of a method for receiving a media service in an embodiment of the present invention;
FIG. 2 is a flowchart of a method for delivering a media service in an embodiment of the present invention;
FIG. 3 is a flowchart of a method for delivering a media service such as the CRBT service in an embodiment of the present invention;
FIG. 4 is a flowchart of a method for delivering a media service such as the CRT service in an embodiment of the present invention;
FIG. 5 shows an apparatus for receiving a media service in an embodiment of the present invention;
FIG. 6 shows an apparatus for delivering a media service in an embodiment of the present invention;
FIG. 7 shows a UE for receiving a media service in an embodiment of the present invention;
FIG. 8 shows a server for delivering a media service in an embodiment of the present invention; and
FIG. 9 shows a system for transmitting a media service in an embodiment of the present invention.

### Detailed Description of the Embodiments

The following detailed description is providedwith reference to the accompanying drawings to provide a thorough understanding of the present invention. Evidently, the drawings and the detailed description are merely representative of particular embodiments of the present invention, and the embodiments are not exhaustive or restrictive.

The embodiments of the present invention provide a method, an apparatus, a system, UE, and a server for receiving and delivering a media service. A carried identifier indicates the attribute of the media information to be received by the UE; the identifier can also indicate the capability required for the UE to process the media service so that the UE can receive the media information matching its capabilityto process media information.

The following expounds the method, apparatus, system, UE, and server for receiving and delivering a media service with reference to accompanying drawings and exemplary embodiments.

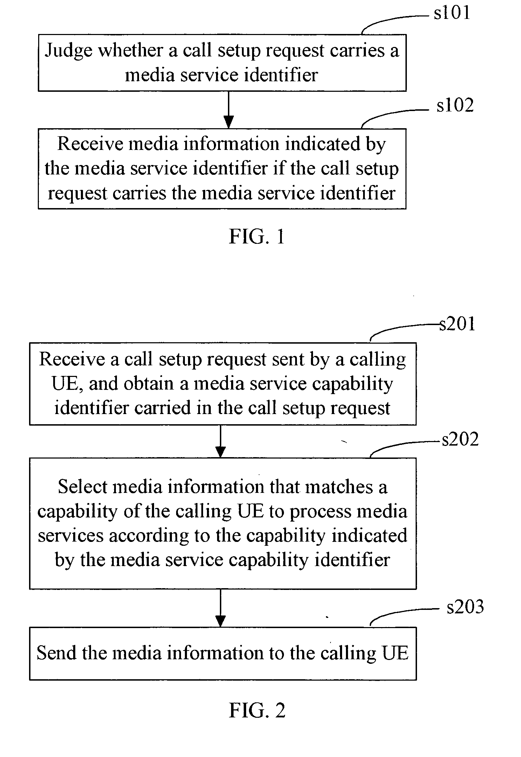

As shown in FIG. 1, a method for receiving a media service in an embodiment of the present invention is applied to a customized multimedia ring tone service and includes the following steps:

Step s101: Judge whether a call setup request carries a media service identifier. Specifically, when sending the call setup request, the calling UE may insert the media service identifier into the request to indicate the attribute of the media information to be played by the calling UE. Alternatively, after the calling UE sends the call setup request to the server, the server inserts the media service identifier into the call setup request.

Step s102: Receive media information indicated by the media service identifier if the call setup request carries the media service identifier; or, reject media information if the call setup request carries no media service identifier. The UE may display the attribute of the media information before or when receiving the media information. For example, if the media information to be played by the calling UE is an audible video CRT, the called UE displays information which indicates that the media information to be played isan audible video CRT, and indicates the type of the current service to the user of the UE; the called UE can shield its own CRT setting, start the external speaker, and receive the CRT information.

Customized multimedia ring tone services include the CRBT service, CRT service, and CBT service. Through the foregoing steps, the called UE can decide whether to receive the media information according to the identifier; and, before receiving the media information, the called UE knows the attribute of the media information and indicates the attribute to the user of the UE, thus preparing for receiving the media information. Before receiving the media information of the calling UE, the called UE may judge whether it is capable of processing the audible video CRT information; if the called UEis capable of processing the audible video CRT information, the called UE receives the audible video CRT information; if the called UEis incapable of processing the audible video CRT information, the called UE does not receive the audible video CRT information, but rings according to the settings on the called UE. The judging process may also be performed by a server. In this way, the case that the UE is not capable of processing the received media information is prevented.

As shown in FIG. 2, a method for delivering a media service in an embodiment of the present invention includes the following steps:

Step s201: Receive a call setup request sent by a calling UE, and obtain a media service capability identifier carried in the call setup request. When the calling UE sends a call setup request to the server on the network, the request carries a media service capability identifier indicating a media service processing capabilityof the calling UE.

Step s202: Select media information that matches amedia service processingcapability of the calling UE according to the capability indicated by the media service capability identifier.

If the called UE has subscribed to the media service, the server selects media information among the media service subscription information of the called UE according to the media service processingcapability of the calling UE. The selected media information should be media information that can be processed by the calling UE, namely, the media information that matches the media service processing capability of the calling UE. If more than one pieceof media information matches the media service processing capability of the calling UE, the server can select any matched media information, or select the media information according to settings of the called UE (for example, the setting of the use time segment).

Step s203: Send the media information to the calling UE.

After sending the media information to the calling UE, the method further includes:
sending session progress information that carries the media attribute identifier to the calling UE so that the calling UE notifies the type of the current service to the user of the UE according to the media information attribute indicated by the media attribute identifier and receives the media information. The notificationmay be made through texts, speeches, or operation menus, or any combination thereof; and
sending session progress information that carries a media attribute identifier to the calling UE, where the media attribute identifier indicates the attribute of the selected media information; after the server selects the matched media information for the calling UE, using the media attribute identifier to indicate the attribute of the media information, adding the identifier to the session progress information and sending the session progress information to the calling UE so that the calling UE knows the attribute of the media information to be played, and then delivering the media information to the calling UE. Alternatively, the media attribute identifier may be carried in the media information delivered to the calling UE.

It should be noted that, if the call setup request received by the server carries no media service capability identifier, the server determines that the calling UE has low media service processing capabilities, and delivers the media information such as audio information which requires low capabilities of the UE to the UE.

By using the method provided in this embodiment, the server selects the matched media information among the media subscription information of the called UE according to the media service processingcapability of the calling UE, and delivers the matched media information to the calling UE, thus preventing failure of playing the media information that requires high capabilities of the UE after such media information is sent to the UE.

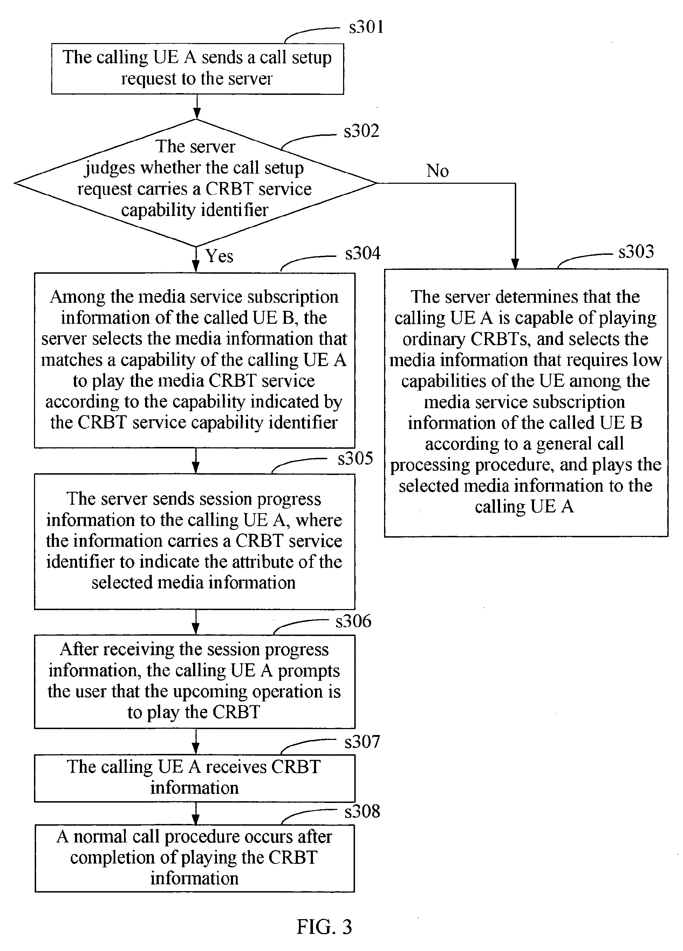

Taking the CRBT service as an example, as shown in FIG. 3, a method for delivering a media service in an embodiment of the present invention includes the following steps:

Step s301: The calling UE A sends a call setup request to the server. If the calling UE A supports the CMR service, the call setup request carries a CRBT service capability identifier. The identifier indicates that the calling UE A is capable of processing media CRBT services, and indicates specific types of CRBT services that can be processed by UE A.

Step s302: After receiving the call setup request, the server judges whether the call setup request carries a CRBT service capability identifier. If the called UE B has subscribed to the media CRBT service, but the call setup request carries no CRBT service capability identifier, perform step s303; if the call setup request carries the CRBT service capability identifier, perform step s304.

Step s303: The server determines that the calling UE A is capable of playing ordinary CRBTs, and obtains the media information (such as an audio CRBT) that requires low capabilities of the UE among the media service subscription information of the called UE B according to a general call processing procedure, and plays the selected media information to the calling UE A.

Step s304: Among the media service subscription information of the called UE B, the server selects the media information that matches a capability of the calling UE A to play the media CRBT service, according to the capability indicated by the CRBT service capability identifier.

Specifically, the CRBT service capability identifier indicates the types of media information that can be processed by the calling UE A, and the server selects the matched media information among the media service subscription information of the called UE according to the attribute of the media information indicated by the CRBT service capability identifier. For example, if the CRBT service capability identifier indicates that the calling UE A is capable of playing a video CRBT, the server selects the video CRBT among the media service subscription information of the called UE; or selects a CRBT type that requires lower capability of the UE.

Step s305: The server sends session progress information to the calling UE A, where the information carries a CRBT service identifier to indicate the attribute of the selected media information.

Step s306: After receiving the session progress information, the calling UE A notifies the user that the imminent operation is to play the CRBT. The notificationmay be made of texts, speeches, or different colors, or any combination thereof; or an operation menu is offered to the user for stopping, pausing or copying the CRBT. At the time of notifying the user, the timing for the current call may be cancelled, and the timing starts again after completion of playing the CRBT. Meanwhile, the corresponding operation may be performed according to the attribute of the media information. If the media information is audio information, the volume of the UE may be adjusted according to the volume of the audio information.

Step s307: The calling UE A receives the CRBT information sent by the network. The operation of notifying the user in step s306 may also be performed when the CMR information is received from the network.

Step s308: A normal call procedure occurs after completion of playing the CRBT information. If the automatic call timing function is disabledin the preceding step, the automatic call timing function needs to be enabledin this step.

If the call setup request sent by the calling UE carries no CRBT service capability identifier, the calling UE is treated as a UE that has ordinary capabilities, and the media CRBT that requires low capabilities of the UE (such as an audio CRBT) is played to the UE, thus accomplishing compatibility of the UE. If the call setup request carries this identifier, proper diverse CMRs can be provided for the calling UE according to the service capability indicated by the identifier.

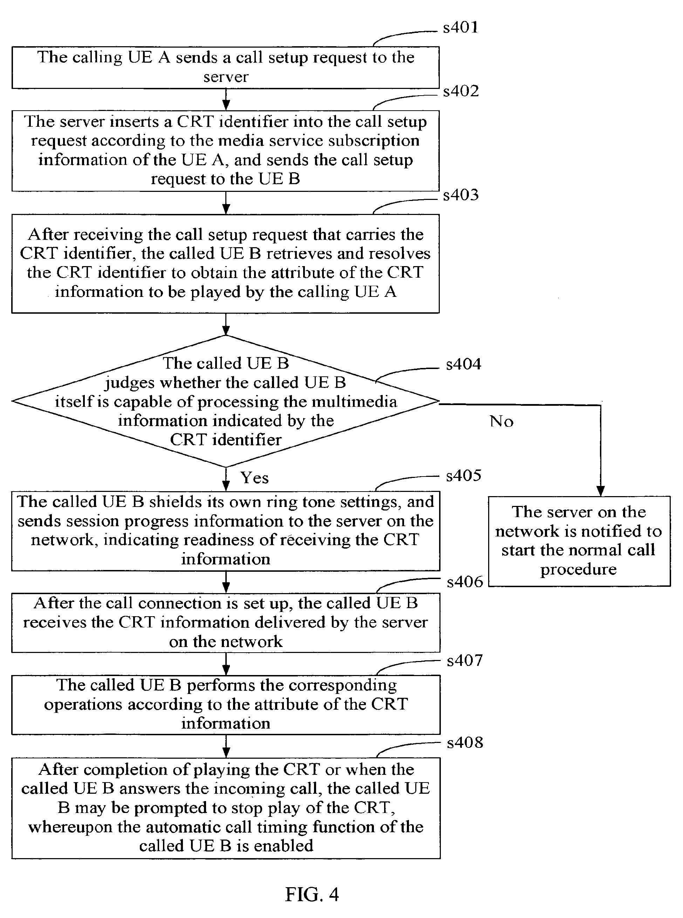

Taking the CRT service as an example, as shown in FIG. 4, a method for delivering a media service in an embodiment of the present invention includes the following steps:

Step s401: The calling UE A sends a call setup request to the server.

Step s402: The server inserts a CRT identifier into the call setup request according to the media service subscription information of the UE A, and sends the call setup request to the UE B. The CRT identifier may also be inserted at the calling UE A directly, tells the called UE B about the imminent or ongoing CRT service, and indicates the attribute of the media information to be received by the called UE B.

Step s403: After receiving the call setup request that carries the CRT identifier, the called UE B retrieves and parses the CRT identifier to obtain the attribute of the CRT information to be played by the calling UE A. Specifically, after it is determined that the request carries the CRT identifier, the called UE B receives the CRT information; if it is determined that the request carries no CRT identifier, the called UE B rejects CRT information.

Step s404: The called UE B judges whether the called UE B itself is capable of processing the CRT information. If the called UE B itself is capable of processing the CRT information, the called UE B notifies the server on the network to start a non-normal call CRT procedure, and performs step s405; if the called UE B itself is incapable of processing the CRT information, the called UE B notifies the server on the network to start a normal call procedure. The judging process may also be performed by the server.

Step s405: The called UE B shields its own ring tone settings, and sends session progress information to the server on the network, indicating readiness of receiving the CRT information.

Step s406: After the call connection is set up, the called UE B receives the CRT information delivered by the server on the network.

Step s407: The called UE B performs the corresponding operations according to the attribute of the CRT information. For example, if the CRT information is multimedia audio information, it is necessary to start the external speaker of the called UE B to play the multimedia audio information; if the CRT information attribute carries information about the required volume, it is necessary to adjust the volume of the UE according to the volume requirement; or, information may pop up to notify the user of the called UE B that the CRT of the calling UE A is being played currently; or, an operation menu may pop up to control the progress of playing the multimedia information (such as stopping play, pausing play, or answering an incoming call).

Step s408: After completion of playing the CRT or when the called UE B answers the incoming call, the called UE B may be notified to stop play of the CRT, whereupon the automatic call timing function of the called UE B is enabled.

In step s404 above, if the called UE B is incapable of processing media information indicated by the CRT identifier, the called UE B is treated as a UE that has inferior capabilities, a normal call procedure occurs, and the CRT set by the user is played on the called UE B. The CRT identifier carries one or more attributes of the media information. If the CRT identifier carries multiple attributes of the media information, the called UE B may judge the attributes of the media information one by one.

The operations in step s407 above may also be performed in step s405, namely, the attribute of the received media information is notified to the user of the UE before the media information is received.

When the media service identifier, media service capability identifier, and media attribute identifier mentioned in the foregoing embodiment are carried in the call setup request or other information, the identifiers are primarily carried through an IMS Communication Service Identifier (ICSI), a Session Description Protocol (SDP), or an Extensible Markup Language (XML) file. In the practical information interaction process, the method for carrying the identifiers is not limited to the three methods above, and the three methods given above serve as preferred examples only.

Mode 1: The identifiers are carried through an ICSI, and more specifically, the Accept-Contact header field is extended to carry the identifiers. In the Session Initiation Protocol (SIP), the Accept-Contact header field may identify the reference information of the UE; the indication information of the CMR services (including the CRBT service, CRT service, and CBT service) in this header field may be set to "+g.3gpp.CMR". To express more detailed information, a feature tag may be defined, or attributes are added, for example, "+g.3gpp.CMR", and "SubAPPName=VALUE", where the SubAPPName represents the sub-application name (sub-service name), and its value and the corresponding sub-application are shown in Table 1:

**Table 1**

| SubAPPName value | Corresponding Sub-Application |
|---|---|
| * | Not depending on sub-application |
| CBT | Customized Background Tone |
| CRT | Customized Ring Tone |
| CRBT | Customized Ring Back Tone |

According to the table above, the service type can be indicated by identifiers in the following ways:
1. "P-Preferred-Service: urn:urn-xxx.cmr" is defined to indicate that the current service is a CMR service; and then "APPLICATION" defines its sub-application. The followingis an example:
   +g.ims.app_ref="<urn: urn-xxx.cmr:3gpp.application.crbt>" indicates that the current service is a CRBT service among the CMR services;
   +g.ims.app_ref="<urn: urn-xxx.cmr:3gpp.application.crt>" indicates that the current service is a CRT service among the CMR services;
   +g.ims.app_ref="<urn: urn-xxx.cmr:3gpp.application.cat>" indicates that the current service is a Customized Alerting Tone (CAT) service among the CMR services; and
   +g.ims.app_ref="<urn: urn-xxx.cmr:3gpp.application. CRS >" indicates that the current service is a Customized Ring Signal (CRS) service among the CMR services.

   In the foregoing example, both the CRBT service and the CAT service are two types of CRBT service using different protocols, and the CRT service and the CRS service are two types of CRT service.
   The attribute information at the time of playing the media information may be added at the end of the foregoing implementation mode, for example, volume information at the time of playing audio information; full-screen display or non-full-screen display at the time of playing video information; or attribute information such as the font at the time of displaying texts.
   On the basis of the foregoing examples, the sub-application expression mode may be extended. Take the CRBT service as an example: "3gpp.application.crbt.text" indicates a text CRBT; "3gpp.application.crbt.audio" indicates an audio CRBT; "3gpp.application.crbt.video" " indicates a video CRBT; and "3gpp.application.crbt.audio&text" and "3gpp.application.crbt. video&text" indicate a CRBT of multiple applications.
   When the call setup request carries a CMR identifier, the following header field may be carried to indicate the media service capability of the calling UE:
   Accept-Contact: +g.ims.app_ref="<urn: urn-xxx. cmr: 3gpp. application. crbt.audio> P-Preferred-Service: urn:urn-xxx.cmr

   The foregoing header field indicates that the calling UE that currently originates the service call is capable of the CRBT service in the CMR services, and more specifically, capable of the audio function in the CRBT service.
   If the information carried in the header field is:
   Accept-Contact: +g.ims.app_ref="<urn: urn-xxx. crt:3gpp. application. crt.audio> P-Preferred-Service: urn:urn-xxx.cmr
   it indicates that the called UE needs to perform the audio CRT service when the called UE knows that the current call is a CRT service in the CMR services.
2. Alternatively, "P-Preferred-Service: urn:urn-xxx.crbt" is defined to indicate that the current service is a specific sub-application of the CMR service. The specific definitions may be as follows:
   urn:urn-xxx.crbt represents a CRBT service;
   urn:urn-xxx.crt represents a CRT service;
   urn:urn-xxx.cat represents a CAT service; and
   urn:urn-xxx.crs represents a CRS service.

The extension of the service definition mode is the same as that in "1" above.

For example, the following header field is added to the call setup request to carry the identifier:
Accept-Contact: +g.ims.app_ref="<urn: urn-xxx. crbt:3gpp. application. crbt.audio> P-Preferred-Service: urn:urn-xxx.crbt

The foregoing header field indicates that the calling UE that currently originates the call setup request is capable of performing the CRBT service, and more specifically, capable of the audio function of the CRBT service.

The following is another example:
Accept-Contact: +g.ims.app_ref="<urn: urn-xxx. crt:3gpp. application. crt.audio.v50%>
P-Preferred-Service: urn:urn-xxx.crt

The foregoing header field indicates that, the called UE needs to perform the audio CRT service operation when the called UE knows that the current call is a CRT service application, and the audio volume is controlled within 50%.

Mode 2: The SDP protocol is extended to carry the identifiers:
Primarily, the "A" attribute is used to carry the CMR identifier in the SDP protocol. This mode includes the following two methods:
Method 1: The attribute in the "A=Attribute:value" part in the SDP protocol is extended.

Two definition methods are applicable:

Definition method 1: The attribute in the "A=Attribute:value" part in the SDP protocol is extended, and the format is defined as "A=FeatureTag: 3gpp.application.ServiceAPP.subAPP.CAP", which indicates the service type and the service style. In the case of the CRBT service, the extended attribute indicates the service capability of the calling UE; in the case of the CBT service, the call setup request received by the called UE carries the identifier, and this identifier indicates the service capability of the calling UE.

"ServiceAPP" indicates the current service, and its value may be "CMR" indicating that the current service is a CMR service.

"subAPP" indicates the current sub-application, and its value may be "CRBT", "CRT", "CBT", "CAT", or "CRS".

CAP indicates the current service style, and its value may be "audio" (audio service), "video" (video service), "text" (text service), or "*" (all services). Multiple service styles may coexist. When multiple service styles coexist, the service styles are not logically contradictory.

When this method is used to indicate that the current service of the calling UE is the CRBT service among the CMR services and that the service styles are Video and Text, the identifier may be carried in the following mode:
A=FeatureTag: 3gpp.application. CMR. CRBT. Video&Text

When this method is used to indicate that the current service of the calling UE is the CBT service among the CMR services and that the service style is Video, the identifier may be carried in the following mode:
A=FeatureTag: 3gpp.application.CMR.CBT.Video

When the call setup request of the calling UE passes through the server, the server inserts the foregoing identifier into the call setup request according to the CBT service subscription information, and then sends the call setup request to the called UE. The identifier indicates that the current service is a CBT service application in the CMR service, and that the current CBT is of the video style. In this way, after receiving the identifier, the called UE connects the data receiving channel, and plays the CBT by using the multimedia setting of the CRT.

Definition method 2: The attribute in the "A=Attribute:value" part in the SDP protocol is extended, and the format is defined as "3gpp.application. subAPP.CAP", where subAPP indicates CRBT, CRT, or CRBT; and CAP indicates audio, video, or text. Different from definition method 1, this method does not require a ServiceAPP field.

Method 2: The identifier is carried in the "A" attribute descriptive of media information.

The following description takes the CRBT service as an example:
v=0
o=- 424 3292855200 IN IP6 FF15:0:0:0:0:0:81:1BC
s=Call session with CRBT
c=IN IP6 FF15:0:0:0:0:0:81:1BD
t=0 0
m=video 9004 RTP/AVP 98
a=rtpmap:98 CRBT/90000
a=fmtp:98 contains-redundant="redundant"

In the foregoing "A" attribute descriptive of the media information, an "a=rtpmap:98 CRBT/90000" field is added to identify the service information of the UE.

Mode 3: An XML file carries the CRBT service identifier.

The data structure is defined below:

```
   <!-- edited with XMLSpy v2008 rel. 2 sp1 (http://www.altova.corn) by 3ddown.com
   (no) -->
   <!ELEMENT CMR EMPTY>
   <!ATTLIST CMR
       CMR_Service CDATA #REQUIRED
       MutiMediaCAP CDATA #IMPLIED
   >
   <!--CMR_Service indicates whether the current service is CRBT, CRT, CBT, CAT,
   CMR, or CSR-->
   <!-MutiMediaCAP indicates the required media type of the CRBT service, namely,
   Audio, Video, or Text-->
```

Example 1: The following indicates that the current UE supports the CRBT service, and that the service styles of the CRBT are Video and Text:

```
   <?xml version=" 1.0" encoding="UTF-8"?>
   <!DOCTYPE CMR SYSTEM " \CMR.dtd">
   <CMR CMR_Service="CRBT" MutiMediaCAP="Video&Text"/>
```

Example 2: The following indicates that the current call is a CRT service, and that the service style of the CRBT is Video:

```
    <?xml version="1.0" encoding="UTF-8"?>
    <!DOCTYPE CMR SYSTEM " \CMR.dtd">
    <CMR CMR_Service="CRT" MutiMediaCAP="Video "/>
```

When a SIP or Hypertext Transfer Protocol (HTTP) carries this file, the file may be carried by means of a multipart type, or carried directly. Alternatively, MIME TYPE may be constructed to indicate the nature of the file, for example, if MIMETYPE is Application/CMR, it indicates that the file is a CRBT service presentation file.

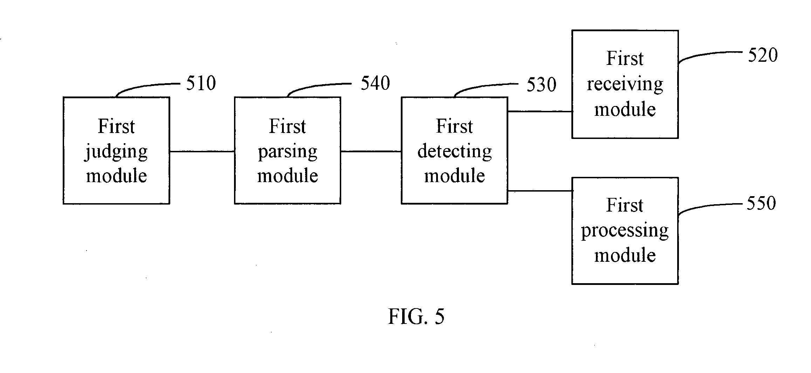

To implement the method above, an apparatus for receiving a media service is provided in an embodiment of the present invention. As shown in FIG. 5, the apparatus includes: a first judging module 510, configured to judge whether a call setup request carries a media service identifier; and a first receiving module 520, configured to receive media information indicated by the media service identifier if the first judging module 510 determines that the call setup request carries the media service identifier.

The apparatus further includes: a first detecting module 530, which is configured to detect whether the UE is capable of processing the media information. The first receiving module 520 is specifically configured to receive media information indicated by the media service identifier if the first detecting module 530 detects that the UE is capable of processing the media information and the first judging module 510 determines that the call setup request carries the media service identifier.

The apparatus further includes: a first parsing module 540, configured to parse the media service identifier and obtain the attribute of the media information indicated by the media service identifier; and a first processing module 550, configured to display the attribute of the media information.

The first processing module 550 is further configured to: shield the settings of the UE and/or start the external speaker for playing the received media information before or when receiving the media information according to the attribute of the media information; and/or pop up information to notifythe user ofthe format of the media information to be played or being played currently; and/or display an operation menu to control the progress of playing the media information.

The foregoing apparatus uses a processing module to display the attribute of the media information on the UE. Therefore, the UE can notifythe user ofthe imminent or ongoing service, prepare for receiving the media information according to the attribute of the media information, and receive the media information.

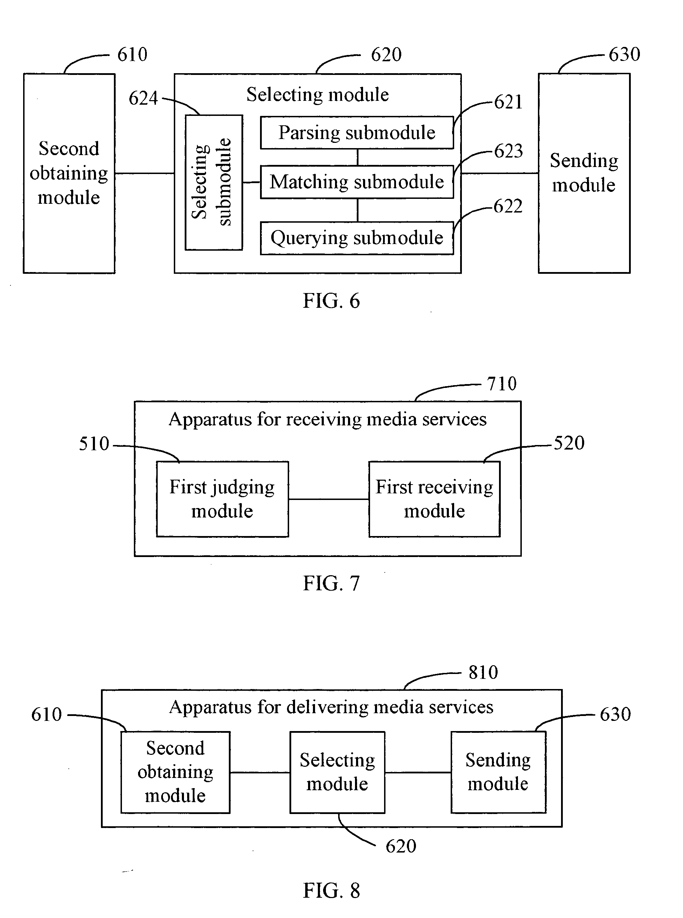

As shown in FIG. 6, an apparatus for delivering a media service in an embodiment of the present invention includes:
a second obtaining module 610, configured to receive a call setup request sent by a calling UE, and obtain a media service capability identifier carried in the call setup request;
a selecting module 620, configured to select media information that matches a media service processing capability of the calling UE according to the capability indicated by the media service capability identifier; and
a sending module 630, configured to send the media information to the calling UE.

The sending module 630 is further configured to send session progress information that carries the media attribute identifier to the calling UE so that the calling UEnotifies the type of the current service to the user of the UEaccording to the media information attribute indicated by the media attribute identifier and receives the media information. The notificationmay be made of texts, speeches, or operation menus, or any combination thereof.

The selecting module 620 includes:
a parsingsubmodule 621, configured to parse the media service capability identifier obtained by the second obtaining module 610 to obtain the media service processing capability of the calling UE;
a querying submodule 622, configured to query the attribute of the media information in the media service subscription information of the called UE;
a matching submodule 623, configured to match the media service processing capability of the calling UE with the attribute of the media information, where the capabilityisobtained by the parsingsubmodule and the attribute is found by the querying submodule 622; and
a selecting submodule 624, configured to select any piece of media information among the matched media information when the matching submodule 623 obtains more than one pieceof matched media information.

Through the foregoing modules, the server can select proper media information for playing according to the capability of the UE to process media information, thus preventing failure of playing the received media information that goes beyond the capability of the UE.

A UE for receiving a media service is provided in an embodiment of the present invention. As shown in FIG. 7, the UE includes an apparatus 710 for receiving a media service. The apparatus 710 for receiving a media service includes: a first judging module 510, configured to judge whether a call setup request carries a media service identifier; and a first receiving module 520, configured to receive media information indicated by the media service identifier if the first judging module 510 determines that the call setup request carries the media service identifier.

The apparatus further includes a first detecting module, which is configured to detect whether the UE is capable of processing the media information. The first receiving module 520 is specifically configured to receive media information indicated by the media service identifier if the first detecting module detects that the UE is capable of processing the media information and the first judging module 510 determines that the call setup request carries the media service identifier.

The apparatus further includes: a first parsing module, configured to parse the media service identifier and obtain the attribute of the media information indicated by the media service identifier; and a first processing module, configured to display the attribute of the media information.

The first processing module is further configured to: shield the settings of the UE and/or start the external speaker for playing the received media information before or when receiving the media information according to the attribute of the media information; and/or pop up information to notifythe user ofthe format of the media information to be played or being played currently; and/or display an operation menu to control the progress of playing the media information.

A server for delivering a media service is provided in an embodiment of the present invention. As shown in FIG. 8, the server includes an apparatus 810 for delivering a media service. The apparatus 810 for delivering a media service includes:
a second obtaining module 610, configured to receive a call setup request sent by a calling UE, and obtain a media service capability identifier carried in the call setup request;
a selecting module 620, configured to select media information that matches a media service processing capability of the calling UE according to the capability indicated by the media service capability identifier; and
a sending module 630, configured to send the media information to the calling UE.

The sending module 630 is further configured to send session progress information that carries the media attribute identifier to the calling UE so that the calling UE notifies the type of the current service to the user of the UE according to the media information attribute indicated by the media attribute identifier and receives the media information. The notificationmay be made of texts, speeches, or operation menus, or any combination thereof.

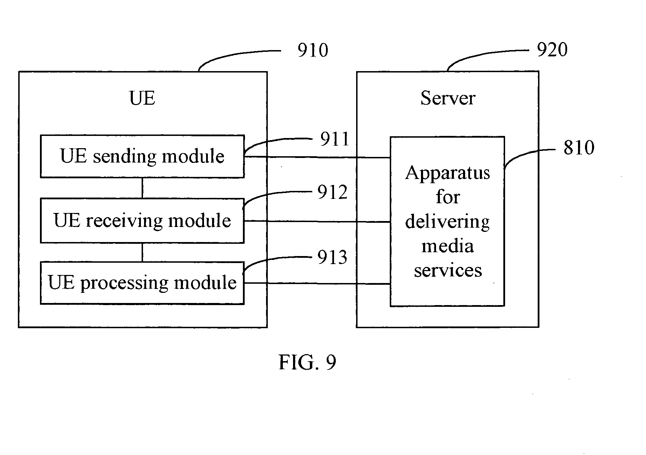

A system for transmitting a media service is provided in an embodiment of the present invention. As shown in FIG. 9, the system includes:
a server 920, which includes an apparatus 810 for delivering a media service and is configured to: receive a call setup request sent by a UE, and obtain a media service capability identifier carried in the call setup request; select media information that matches a media service processing capability of the UE according to the capability indicated by the media service capability identifier; and send the media information to the UE; and
a UE 910, configured to send the call setup request to the server 920 and receive the session progress information and media information sent by the server 920.

The UE 910 includes:
a UE sending module 911, configured to send a call setup request that carries a media service capability identifier to the server 920;
a UE receiving module 912, configured to receive the media information sent by the server 920; and
a UE processing module 913, configured to notify the type of the current service and receive the media information to the user of the UE according to the media information attribute indicated by the media attribute identifier after the UE receiving module 912 receives the session progress information that carries the media attribute identifier, where the notificationmay be made of texts, speeches, or operation menus, or any combination thereof.

The UE processing module 913 is further configured to notify the attribute of the media information indicated by the media attribute identifier to the user of the UE. The UE processing module provides the notification through texts, speeches, colors, operation menus, or any combination thereof. The call timing function is disabledat the time of notifying, and is enabledagain after completion of playing the media information.

By using the method provided in this embodiment, the UE obtains a media service identifier carried in a call setup request; parses the media service identifier to obtain the media information attribute indicated by the media service identifier; and displays the media information attribute and receives the media information. The carried identifier indicates the type of the media service so that the UE knows the type of the imminent media service and performs operations that match this type. Meanwhile, the server receives the call setup request, and obtains the media service capability identifier carried in the call setup request; selects media information that matches a media service processing capability of the calling UE according to the capability indicated by the media service capability identifier; and sends the session progress information that carries the media attribute identifier to the calling UE, where the media attribute identifier indicates the attribute of the selected media information. Therefore, the server delivers the matched media information according to the capability of the UE, and overcomes incompatibility between the media information and the UE capability.

After reading the foregoing embodiments, those skilled in the art are clearly aware that the present invention may be implemented through hardware, or through software in addition to a necessary universal hardware platform. Therefore, the technical solution under the present invention may be embodied as a software product. The software product may be stored in a non-volatile storage medium (such as a Compact Disk-Read Only Memory (CD-ROM), a Universal Serial Bus (USB) flash disk, or a mobile hard disk), and may include several instructions that enable a computer device (such as a personal computer, a server, or a network device) to perform the methods provided in the embodiments of the present invention.

The above descriptions are merely exemplary embodiments of the present invention, but not intended to limit the present invention.

## Claims

1. A method for receiving a media service, applied to a customized multimedia ring tone service, comprising:
judging (s101), by called User Equipment, UE, whether a call setup request carries a media service identifier; and
receiving (s102), by the called UE, media information indicated by the media service identifier if the call setup request carries the media service identifier;
wherein, after the judging that the call setup request carries the media service identifier and before receiving the media information indicated by the media service identifier, the method further comprises:
determining, by the called UE, that the called UE is capable of processing the media information indicated by the media service identifier; **characterized in that**:
after determining that the call setup request carries the media service identifier, the method further comprises:
parsing, by the called UE, the media service identifier and obtaining an attribute of the media information indicated by the media service identifier.

2. The method according to claim 1, further comprising:
rejecting, by the called UE, media information if determining that the call setup request carries no media service identifier.

3. The method according to claim 1, wherein after determining that the call setup request carries the media service identifier, the method further comprises:
displaying, by the called UE, the attribute of the media information.

4. The method according to claim 1, wherein the media service identifier is one of:
a media service identifier inserted by a calling UE into the call setup request; and
a media service identifier inserted by a server into the call setup request after receiving the call setup request of the calling UE.

5. An apparatus for receiving a media service, comprising:
a first judging module (510), configured to judge whether a call setup request carries a media service identifier; and
a first receiving module (520), configured to receive media information indicated by the media service identifier if the first judging module determines that the call setup request carries the media service identifier;
a first detecting module, (530) configured to detect whether a User Equipment, UE, is capable of processing the media information;
wherein, the first receiving module (520) is specifically configured to receive the media information indicated by the media service identifier if the first detecting module detects that the UE is capable of processing the media information and the first judging module determines that the call setup request carries the media service identifier;
**characterized in that** the apparatus further comprises:
a first parsing module (540), configured to parse the media service identifier and obtain an attribute of the media information indicated by the media service identifier.

6. The apparatus according to claim 5, further comprising:
a first processing module (550), configured to display the attribute of the media information.

7. User Equipment UE for receiving a media service, comprising the apparatus for receiving a media service according to claim 5 or 6.

## Patentansprüche

1. Verfahren zum Empfangen eines Mediendienstes, der auf einen kundenspezifischen Multimedia-Ruftondienst angewendet wird, das Folgendes umfasst:
Beurteilen (s101) durch ein angerufenes Anwendergerät, UE, ob eine Anrufaufbauanforderung eine Mediendienstkennung führt; und
Empfangen (S 102) durch das angerufene UE von Medieninformationen, die von der Mediendienstkennung angegeben werden, falls die Anrufaufbauanforderung die Mediendienstkennung führt;
wobei das Verfahren nach dem Beurteilen, dass die Anrufaufbauanforderung die Mediendienstkennung führt, und vor dem Empfangen der von der Mediendienstkennung angegebenen Medieninformationen ferner Folgendes umfasst: Bestimmen durch das angerufene UE, dass das angerufene UE die Medieninformationen, die von der Mediendienstkennung angegeben werden, verarbeiten kann;
**dadurch gekennzeichnet, dass**:
das Verfahren nach dem Bestimmen, dass die Anrufaufbauanforderung die Mediendienstkennung führt, ferner Folgendes umfasst:
Analysieren durch das angerufene UE der Mediendienstkennung und Erhalten eines Attributs der Medieninformationen, die durch die Mediendienstkennung angegeben werden.

2. Verfahren nach Anspruch 1, das ferner Folgendes umfasst:
Zurückweisen durch das angerufene UE von Medieninformationen, falls bestimmt wird, dass die Anrufaufbauanforderung keine Mediendienstkennung führt.

3. Verfahren nach Anspruch 1, wobei das Verfahren nach dem Bestimmen, dass die Anrufaufbauanforderung die Mediendienstkennung führt, ferner Folgendes umfasst:
Anzeigen durch das angerufene UE des Attributs der Medieninformationen.

4. Verfahren nach Anspruch 1, wobei die Mediendienstkennung eine der folgenden Kennungen ist:
eine Mediendienstkennung, die durch das anrufende UE in die Anrufaufbauanforderung eingesetzt wird; und
eine Mediendienstkennung, die durch einen Server in die Anrufaufbauanforderung eingesetzt wird, nachdem er die Anrufaufbauanforderung des anrufenden UE empfangen hat.

5. Vorrichtung zum Empfangen eines Mediendienstes, die Folgendes umfasst:
ein erstes Beurteilungsmodul (510), das konfiguriert ist, zu beurteilen, ob eine Anrufaufbauanforderung eine Mediendienstkennung führt; und
ein erstes Empfangsmodul (520), das konfiguriert ist, Medieninformationen, die durch die Mediendienstkennung angegeben werden, zu empfangen, falls das erste Beurteilungsmodul bestimmt, dass die Anrufaufbauanforderung die Mediendienstkennung führt;
ein erstes Detektionsmodul (530), das konfiguriert ist, zu detektieren, ob ein Anwendergerät, UE, die Medieninformationen verarbeiten kann;
wobei das erste Empfangsmodul (520) insbesondere konfiguriert ist, die durch die Mediendienstkennung angegebenen Medieninformationen zu empfangen, falls das erste Detektionsmodul detektiert, dass das UE die Medieninformationen verarbeiten kann, und das erste Beurteilungsmodul bestimmt, dass die Anrufaufbauanforderung die Mediendienstkennung führt;
**dadurch gekennzeichnet, dass** die Vorrichtung ferner Folgendes umfasst:
ein erstes Analysemodul (540), das konfiguriert ist, die Mediendienstkennung zu analysieren und ein Attribut der Medieninformationen, die durch die Mediendienstkennung angegeben werden, zu erhalten.

6. Vorrichtung nach Anspruch 5, die ferner Folgendes umfasst:
ein erstes Verarbeitungsmodul (550), das konfiguriert ist, das Attribut der Medieninformationen anzuzeigen.

7. Anwendergerät, UE, zum Empfangen eines Mediendienstes, das die Vorrichtung zum Empfangen eines Mediendienstes nach Anspruch 5 oder 6 enthält.

## Revendications

1. Procédé de réception d'un service multimédia, appliqué à un service de tonalité de sonnerie multimédia personnalisée, comprenant :
l'évaluation (s101), par un Équipement Utilisateur, UE (User Equipment), appelé du fait qu'une demande d'établissement d'appel achemine ou non un identifiant de service multimédia ; et
la réception (s102), par l'UE appelé, d'informations multimédia indiquées par l'identifiant de service multimédia si la demande d'établissement d'appel achemine l'identifiant de service multimédia ;
dans lequel, après l'évaluation du fait que la demande d'établissement d'appel achemine l'identifiant de service multimédia et avant la réception des informations multimédia indiquées par l'identifiant de service multimédia, le procédé comprend en outre :
la détermination, par l'UE appelé, du fait que l'UE appelé est capable de traiter les informations multimédia indiquées par l'identifiant de service multimédia ; **caractérisé en ce que** :
après la détermination du fait que la demande d'établissement d'appel achemine l'identifiant de service multimédia, le procédé comprend en outre :
l'analyse syntaxique, par l'UE appelé, de l'identifiant de service multimédia et l'obtention d'un attribut des informations multimédia indiquées par l'identifiant de service multimédia.

2. Procédé selon la revendication 1, comprenant en outre :
le rejet, par l'UE appelé, d'informations multimédia s'il est déterminé que la demande d'établissement d'appel n'achemine pas d'identifiant de service multimédia.

3. Procédé selon la revendication 1, dans lequel, après la détermination du fait que la demande d'établissement d'appel achemine l'identifiant de service multimédia, le procédé comprend en outre :
l'affichage, par l'UE appelé, de l'attribut des informations multimédia.

4. Procédé selon la revendication 1, dans lequel l'identifiant de service multimédia est l'un:
d'un identifiant de service multimédia inséré par un UE appelant dans la demande d'établissement d'appel ; et
d'un identifiant de service multimédia inséré par un serveur dans la demande d'établissement d'appel après réception de la demande d'établissement d'appel de l'UE appelant.

5. Appareil destiné à recevoir un service multimédia, comprenant :
un premier module d'évaluation (510), configuré pour évaluer si une demande d'établissement d'appel achemine un identifiant de service multimédia ; et
un premier module de réception (520), configuré pour recevoir des informations multimédia indiquées par l'identifiant de service multimédia si le premier module d'évaluation détermine que la demande d'établissement d'appel achemine l'identifiant de service multimédia ;
un premier module de détection (530), configuré pour détecter si un Équipement Utilisateur, UE, est capable de traiter des informations multimédia ;
dans lequel le premier module de réception (520) est spécifiquement configuré pour recevoir les informations multimédia indiquées par l'identifiant de service multimédia si le premier module de détection détecte que l'UE est capable de traiter les informations multimédia et si le premier module d'évaluation détermine que la demande d'établissement d'appel achemine l'identifiant de service multimédia ;
**caractérisé en ce que** l'appareil comprend en outre :
un premier module d'analyse syntaxique (540), configuré pour analyser syntaxiquement l'identifiant de service multimédia et obtenir un attribut des informations multimédia indiquées par l'identifiant de service multimédia.

6. Appareil selon la revendication 5, comprenant en outre :
un premier module de traitement (550), configuré pour afficher l'attribut des informations multimédia.

7. Équipement Utilisateur, UE, destiné à recevoir un service multimédia, comprenant l'appareil destiné à recevoir un service multimédia selon la revendication 5 ou 6.
